# EUROPEAN PATENT APPLICATION

(11) **EP 3 471 067 A1**
(43) Date of publication of application: **17.04.2019**
(21) Application number: 17465561.3
(22) Date of filing: 11.10.2017
(51) Int. Cl.: G07C 9/00, B60R 25/24, B60R 25/25, B60R 25/20

(54) **SECURITY SYSTEM AND METHOD**

(71) Applicant: Continental Automotive GmbH, 30165 Hannover (DE)
(72) Inventor: Chelaru, Andrei, 700623 Iasi (RO); Gogu, Elena-Mirela, 611156 Roman (RO); Mocanu, Razvan, 705300 Tirgu Frumos (RO); Padurariu, Catalin, 7007515 Iasi (RO); Homutescu, Adrian, N/A Iasi (RO); Patrascu, Daniel, 707313 Iasi (RO)

(57) **Abstract**

A security system (500) for a vehicle comprises an authentication module (501) configured to identify a user as an authorized user or as belonging to an authorized user group, and a security module (502) configured to select a user profile based on the identified user or user group, and to initiate an activation and/or deactivation of functions depending on the selected user profile.

## Description

The current invention relates to a security system and a related method, in particular a security system for a vehicle.

Most vehicles today may be unlocked and started using an electronic key. Some start and access systems are known in which the user needs to press an unlocking button on the key to unlock the vehicle. In order to start the vehicle, the key usually has to be inserted into an arrangement which replaces the ignition switch, as is known from older vehicles. Other start and access systems are known in which the vehicle may be unlocked and started without the user having to press a button or having to insert the key in any arrangement. Such start and access systems are often called keyless start and entry systems. With keyless start and entry systems, the vehicle may be unlocked automatically when the key is detected within a certain distance from the vehicle. In order to start the vehicle, a start button within the vehicle usually has to be pressed.

Many other start and entry systems are known. However, most of these systems exhibit certain security risks. Usually, if an unauthorized person comes into possession of the vehicle key or an electronic device which replaces the vehicle key, this person may gain access to the vehicle and may drive away with the vehicle.

The problem to be solved by the current invention is to provide a security system and method which provide a higher security level than present solutions.

This problem is solved by a security system according to claim 1 and a method according to claim 10. Configurations and further developments of the invention are the subject of the dependent claims.

A security system for a vehicle includes an authentication module configured to identify a user as an authorized user or as belonging to an authorized user group, and a security module configured to select a user profile based on the identified user or user group, and to initiate an activation and/or deactivation of functions depending on the selected user profile.

Such a security system has an increased security level, because certain users may only use certain functions.

The initiation of an activation and/or deactivation of functions may include initiating an activation and/or deactivation of at least one of vehicle-related functions and route-related functions.

The activation and/or deactivation of vehicle-related functions may include at least one of granting or denying access to certain parts of the vehicle, enabling or disabling the start of the vehicle, enabling or disabling the entertainment system, enabling or disabling comfort functions of the vehicle, setting or derestricting a maximum speed, or enabling or disabling a navigation system. This may further increase the security level of the vehicle, as some users may not be allowed to use certain functions related to the vehicle.

The activation and/or deactivation of road-related functions may include at least one of allowing or denying the operation of the vehicle in certain areas, or allowing or denying the operation of the vehicle on a certain type of road. This may further increase the security level, because the vehicle may not be allowed far from a certain location or may not be allowed to drive on low quality roads, for example.

Identifying a user as an authorized user or as belonging to an authorized user group may comprise at least one of face recognition, voice recognition, fingerprint recognition, detection of a vehicle key, and detection of an electronic device functioning as a vehicle key. Such authentication methods are usually very reliable methods which allow unambiguous identification of known users.

The system may further comprise a fleet management interface module that is configured to communicate with an external authority. In this way, the external authority may be informed about any irregularities, a user may send requests to the external authority, the external authority may grant extra rights to the user, may give instructions to a user or may give instructions to the vehicle, for example.

The system may further comprise a Human Machine Interface that is configured to provide an interface between the system and a user. This allows the system to give instructions to the user, and the user to respond to the instructions, for example.

The Human Machine Interface may comprise at least one of a screen, a monitor, a touchscreen, a loudspeaker, a microphone, a keyboard, a keypad, a camera, a physical key, a biometric input device, a mouse, a graphical user interface, a natural user interface, and a brain computer interface. Such devices are generally available to be used as Human Machine Interface. Some of the device are already available in vehicles or in electronic devices (e.g., mobile phone) the user might be carrying with him.

The security module may further be configured to select a user profile based on the number and/or kinds of different authorization methods that are used for identifying the user. Using two or more authorization methods may further increase the security level of the system. The likelihood that a user is identified correctly increases if more than one authorization method is used.

A method comprises identifying a user as an authorized user or as belonging to an authorized user group, selecting a user profile based on the identified user or user group, and initiating an activation and/or deactivation of functions depending on the selected user profile.

Examples are now explained with reference to the drawings. In the drawings the same reference characters denote like features.
Figure 1 illustrates the general principle of a keyless start and entry system.
Figure 2 illustrates a camera based entry system.
Figure 3 exemplarily illustrates in a block diagram a security system for a vehicle according to the present invention.
Figure 4 exemplarily illustrates in a block diagram a further security system for a vehicle according to the present invention.
Figure 5 exemplarily illustrates in a flow diagram a method according to the present invention.

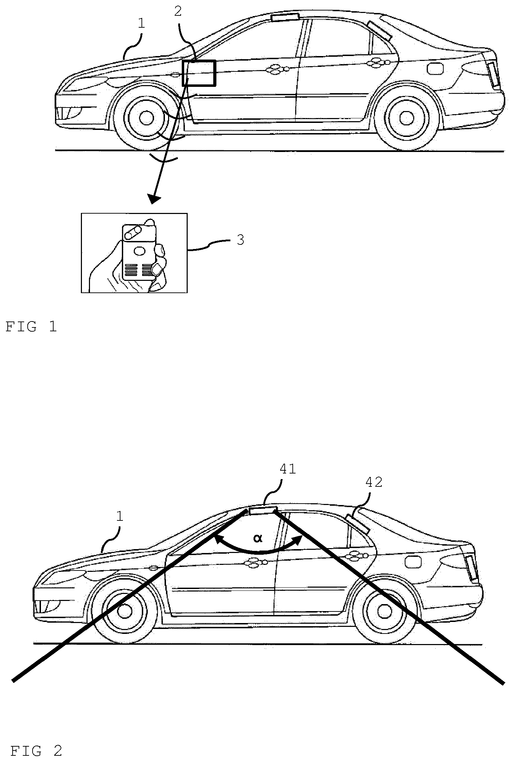

Figure 1 illustrates a vehicle 1 with a keyless start and entry system. The start and entry system comprises a control unit 2.

The control unit 2 may be arranged anywhere within or on the vehicle 1. The control unit 2 is configured to trigger an unlocking or engine start process if an electronic key belonging to the vehicle 1 is detected near or inside the vehicle 1. The control unit 2 sends out inquiry signals. Such inquiry signals are usually low frequency (about 20kHz to 200kHz) signals. The inquiry signals are coded with a first coding chart. The inquiry signals may be received by a transponder unit 3 if the transponder unit 3 is within the range of the signals. The transponder unit 3 decodes, analyses and/or further processes the inquiry signals. After further processing the inquiry signals, the transponder unit 3 sends response signals back to the control unit 2. The response signals are coded with a second coding chart. The response signals may be generated by means of load modulation, for example, and may be decoded within the vehicle 1.

The vehicle 1 knows both coding charts and may compare the original inquiry signals with the received response signals. If the response signals are identified as being correct, the vehicle 1 may be unlocked. If a start button is pressed and the response signals are identified as being correct, the vehicle 1 may be started. If, after sending the inquiry signals, no response signals or incorrect response signals are received within a certain time, nothing happens and the vehicle 1 remains locked and/or turned off.

The transponder unit 3 may be arranged within a vehicle key or a portable device such as a mobile phone, for example, which the user of the vehicle 1 carries with him.

The control unit 2 may send out inquiry signals in regular intervals or in response to a certain trigger event. Such a trigger event may be the user touching the door handle or pressing a start button, for example.

The vehicle 1 may be any kind of vehicle, for example a passenger car, a truck, a bus, a train, a tractor, a motorcycle, a boat, or an aircraft.

In many start and entry systems today, a portable electronic device such as a smart phone, a laptop, a tablet device, or a portable multimedia device, for example, may act as the vehicle key (transponder unit 3) . In such cases, it is no longer necessary for the user to carry a separate vehicle key. Most people today possess smart phones which they carry with them most of the time. By making the smart phone act as a vehicle key, it is no longer necessary to carry a dedicated vehicle key in addition to the smart phone.

Figure 2 illustrates a vehicle 1 with a camera based entry system. The vehicle 1 comprises a camera unit comprising at least one camera 41, 42. When activated, the camera unit is configured to take pictures of the surroundings and/or the interior of the vehicle 1. The camera unit may process the pictures, for example by means of face recognition techniques. If an authorized user is recognized outside the vehicle 1, the vehicle 1 may be unlocked such that the user may enter the vehicle 1. If an authorized user is recognized inside the vehicle 1, the vehicle 1 may be unblocked such that the user can start the vehicle's engine, for example.

At least one camera 41, 42 may be mounted on the outside of the vehicle 1. Additionally or alternatively, at least one camera may be mounted inside the vehicle 1. The pictures that are taken by the camera unit may cover an angle α. The angle α may be between 30° and 360°, for example. For example, an area in front of the driver's door may be covered by a first camera 41. The pictures taken by the first camera 41 may cover an angle α of between 45° and 120°, for example. Any other angles and number of cameras are possible.

Using face recognition techniques may increase the safety level of the vehicle. However, problems may arise, for example, if many different users use the same vehicle as is the case with rental cars or trucks which are used by several different drivers, for example.

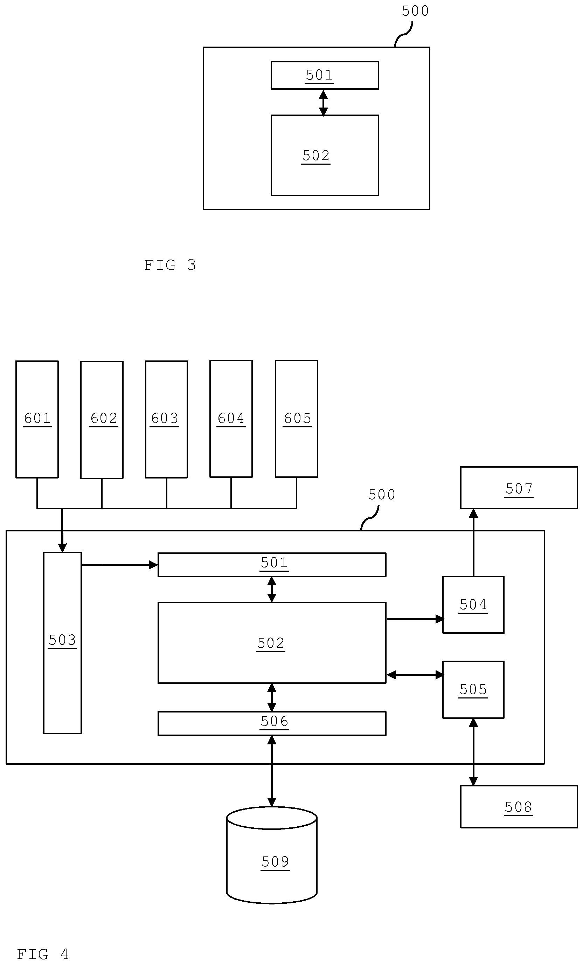

Figure 3 schematically illustrates a security system 500 which further increases the security level of a vehicle. The security system 500 comprises an authentication module 501 and a security module 502. The authentication module 501 is configured to perform user authentication. To authenticate a user, the authentication module 501 may perform one or more authentication techniques. For example, the authentication module 501 may first check, whether an authenticated vehicle key is within a certain range of the vehicle 1, as has been described with reference to Figure 1 above. In order to confirm, that the vehicle key is carried by an authenticated user, for example, the authentication module 501 may further perform face recognition techniques, as has been described with reference to Figure 2 above. Any other authentication techniques may additionally or alternatively be used to authenticate the user. Further authentication techniques may include voice recognition or fingerprint recognition, for example.

Voice recognition and fingerprint recognition techniques, for example, are generally similar to the face recognition technique that has been described with respect to Figure 2 above. Instead of a camera 41, 42, a microphone or a fingerprint reader may be arranged anywhere outside or inside the vehicle. For example, many electronic devices such as mobile phones, for example, already include microphones and fingerprint readers. Many mobile phones today offer the possibility to unlock the phone using fingerprint recognition techniques. Therefore, such electronic devices could be used to perform authentication. It is, however, also possible that a microphone of the vehicle is used (e.g., hands-free system), or that an additional microphone or fingerprint reader is arranged anywhere in the vehicle. Generally, the security level increases, the more different authentication techniques are performed to authenticate a user. The mentioned techniques are only examples. Any other suitable authentication techniques may be used.

If the authentication module 501 identifies a user as an authenticated user or as belonging to an authenticated user group, the authentication module 501 may provide this information to the security module 502. For example, the user may be identified as a first user, who is the owner of the vehicle 1. It is, however, also possible, that the user is identified as a second user, who, for example, is the husband, wife, child or friend of the owner of the vehicle. In order to unambiguously identify a specific user, the user generally has to be known to the authentication module 501. For example, information concerning the user may be stored in the authentication module 501 or the authentication module 501 may have access to a server or any other external unit in which information about specific users may be stored.

For example, the face, the voice and/or the fingerprint of a user may be known to the system. The user may perform a registration process, for example, in which he provides samples of his voice, has pictures taken of his face and/or leaves his fingerprint. The voice samples, pictures and/or fingerprint may be stored appropriately. By performing an appropriate authentication technique, the user may later be unambiguously identified. For example, the user may perform a voice recognition technique when he wishes to use the car. He leaves a further sample of his voice which is then compared to the sample that was stored during the registration process. If the voice samples match, the user may be identified as an authenticated user.

Other users may not be known to the system. This may especially be the case, for example, if the vehicle is a rental car which is used by many different users. The rental car company may transmit a security code to both the user and the vehicle. If the user enters the correct security code which matches the code that is known to the vehicle, the user may be identified as belonging to the user group "customer", for example. User groups may be defined in any suitable way. It is, however, also possible that the user leaves a voice sample, fingerprint or picture of his face at the office of the rental car company when he rents the car. While he walks to the car, the sample may be transmitted to the car. When the user arrives at the car, he may leave another sample which is compared to the sample he left previously at the office. The user may then be unambiguously identified.

A user profile may be defined for each user and/or user group. The user profile may define which functions may be activated for a certain user/user group and which rights a certain user/user group has. For example, a first user may be the owner of the vehicle 1. The first user may have all rights and may use all available features. For example, there may be no restrictions concerning a maximum speed and the first user may be allowed to drive everywhere he wishes to. A second user, for example, may be a child of the user. When the user is identified as the second user, the maximum speed at which the vehicle 1 may be driven may be limited to a certain maximum speed, for example. Further, the vehicle 1 may be prohibited to drive on certain roads such as highways, for example. The rights of the second user may be restricted, for example, because he is an unexperienced driver.

In this way, user profiles may differ from each other for different users and/or user groups. For example, some users may not be able to open the trunk of the vehicle, drive out of a certain area (e.g., outside a certain city, outside a certain country, etc.), use the vehicle 1 for longer than a certain specified time (e.g., not longer than 1h, not longer than 3hrs, etc.), drive on a certain type of road (e.g., highways, pedestrian zones, etc.), or use certain functions of the vehicle (e.g., entertainment system, top of a convertible, auxiliary heating, etc.).

The functions that are to be enabled/disabled for a certain user profile may be divided in vehicle-related functions and route-related functions for example. Vehicle related functions may include access/no access to certain parts of the vehicle, enabling/disabling the start of the vehicle, enabling/disabling the entertainment system, enabling/disabling comfort functions of the vehicle, setting/derestricting a maximum speed, or enabling/disabling a navigation system, for example. Route-related functions may include granting/denying access to certain areas (e.g., different countries, outside a city, inside a city), or allowing/denying the operation of the vehicle on a certain type of road (e.g., highway), for example.

For example, the rights of a user which is not a regular user of the vehicle may be severely restricted. According to another example, sensors may observe the driving behavior of the users. Based on the driving behavior that was observed in the past, the rights of a user may be restricted or extended. For example, a careless driver may not be allowed to drive on low quality roads with many potholes, because he is more likely to damage the vehicle on such roads. It is also possible to associate a certain user to a user group based on the authentication technique that is used to identify the user. For example, if only a car key is used for identification, the user may be identified as belonging to a user group which has very limited rights. If the user further uses face recognition for authentication, and the user is identified as a certain user, he may be granted more rights. If his identity is even further authenticated by voice recognition and/or fingerprint recognition, for example, the user may be granted even more rights.

In this way, many different user profiles may be defined. The user profiles may be default user profiles that are defined by the manufacturer of the vehicle. It is, however, also possible that user profiles may be defined by a car rental company or by the user of the vehicle. If the vehicle is a bus or truck, for example, user profiles may be defined by the company that owns the bus or truck. Many different configurations are possible for the different user profiles.

The security module 502 is configured to choose the correct user profile based on the information received from the authentication module 501. If a user is identified as an authorized user or as belonging to an authorized user group, the security module 502 may identify the correct user profile and initiates enabling/disabling of the respective features, depending on the user profile. For example, if the user has been identified as the first user, the security module 502 may select the user profile that has been stored for the first user.

The above mentioned functions and rights merely constitute examples of how a user profile may be configured. Several further exemplary use case scenarios will be described in the following.
Scenario 1: The vehicle is a fleet vehicle that is used by many different users. A first user uses voice and face recognition for authentication. The user is identified as belonging to a first user group. The rights for the first user group are defined by a fleet manager and may be stored in the vehicle. When the user is identified as belonging to the first user group, the vehicle may determine which rights are to be granted to the first user based on the stored user group information. As the user only uses voice and face recognition, he may be allowed to drive within a certain city for a specified amount of time, e.g., for the weekend. If the user additionally carries the vehicle key on him and further authenticates himself with the vehicle key, his rights may be extended for driving outside the city.
Scenario 2: The vehicle is a fleet vehicle, as in scenario 1. The first user uses voice and face recognition for authentication and is identified as belonging to a first user group. However, several further persons are detected inside the vehicle. Before allowing the first user to start the engine, the other users need to authenticate themselves. If one or more users are not known to the vehicle or the system and several attempts to authenticate them have failed, the vehicle may notify the fleet manager and inform him about the unknown persons inside the car. Operation of the vehicle may be refused until the unknown persons leave the car or until the fleet manager expressly enables the vehicle operation. The first user, for example, may be an employee of a firm, having only limited rights. If, for example, the user is identified as a second user who is a manager of the firm, he might be granted more rights and may be allowed to transport unknown passengers without requesting permission of the fleet manager, for example.
Scenario 3: A user has authenticated himself and is driving the car, however, with limited rights. In particular, the user is not allowed to drive outside a specified area. When he tries to leave this area, he may be informed that he is now exiting the allowed area. For example, an acoustical or visual warning may be presented to the user. If he keeps on driving outside the specified area, the vehicle may slow down and finally come to a halt, because the user is not allowed to drive there. The slowing and stopping of the vehicle may occur automatically. Optionally, the fleet manager may be informed that the vehicle has been stopped because of a violation of the rights. However, it is also possible that the fleet manager is first informed about the user driving outside the allowed area and the fleet manager explicitly sends a command to the vehicle to slow down and stop.
Scenario 4: A user is only allowed to drive within a certain area. However, due to heavy traffic or road construction he is forced to take an alternative route which leads him outside the allowed area. The user contacts the fleet manager to inform him about the situation and is granted extended rights "on the fly".
Scenario 5: The child of the car owner has just got his driver's license and is still a very unexperienced driver. The rights of the child, therefore, may be restricted. For example, the child may not be allowed to drive at a speed above 120km/h, or may not be allowed to drive on highways. The child may, for example, only be allowed to drive the vehicle at certain specified times. For example, the child may be allowed to drive to/from school or university, but may not be allowed to drive at night. When the child gets older and more experienced, the car owner may extend the rights accordingly. Friends of the child may not be allowed to drive the vehicle at all, because they are not registered as authorized users.
Scenario 6: The user may be identified as an authorized user and may drive the vehicle. The vehicle is a company vehicle and the user drives to the company headquarters and tries to enter a closed car park. The vehicle automatically transmits the identity of the driver to a security system or access control system. If the user is registered in the access control system, access to the car park may be granted automatically.
Scenario 7: The vehicle may be a self-driving vehicle that may drive without the intervention of a user. If the user violates his rights, for example, or if the vehicle is left behind by a user, the fleet manager may issue a command which is received by the vehicle and which causes the vehicle to automatically drive to a specified location.
Scenario 8: Several different sensors are mounted in the vehicle. One sensor, for example, may be configured to detect alcohol, while another sensor is configured to detect drugs. A user, for example has to perform an alcohol and/or drug test during the authentication procedure. The sensor, however, may also be configured to detect alcohol in a person's breath without the person explicitly performing an alcohol test. If any alcohol or drugs are detected, the vehicle's engine may be blocked such that the user cannot use the vehicle. Additionally, the fleet manager may be informed. The fleet manager may explicitly enable the vehicle's engine if, for example, only passengers are intoxicated, but not the driver of the vehicle.
Scenario 9: A user has been authorized and has been allowed to start and drive the vehicle. However, the user is driving the vehicle towards a certain area such as a pedestrian zone, for example. If the vehicle is not on its way to deliver goods to a store or a restaurant located in the pedestrian zone, for example, the speed of the vehicle may be automatically reduced or the vehicle may be stopped and come to a halt in order to prevent the vehicle from entering the area. In this way, for example, attacks on pedestrians may be prevented. If a truck is stolen and an unauthorized person tries to drive the vehicle, the person may not be granted certain rights, even if he is in possession of the vehicle keys. Further, it may be detected that an unauthorized person is present on a passenger seat which may lead to a restriction of the rights, even if the driver himself is an authorized driver who has extended rights if no passenger is present in the truck.
Scenario 10: A user tries to authenticate himself, but is not identified as an authorized user or as belonging to an authorized user group. If authentication with a first authentication method fails (e.g., face recognition), the vehicle may request the user to authenticate himself using different authentication methods (e.g., fingerprint recognition). The user tries several time to authenticate himself, using the different authentication methods. If several attempts to authenticate the user were unsuccessful, the fleet manager may be informed about the situation. The fleet manager may, for example, also be informed if someone tries to break into the vehicle and to force operation of the vehicle without identifying himself. The fleet manager may then take respective actions such as informing the police about an attempted break in. It is also possible, for example, that the police is immediately informed by the vehicle, without first informing the fleet manager.
Scenario 11: The vehicle is a rental car. Different billing rules apply for different users, different driving styles, different routes, or different speed limits, for example. For example, a user may be charged less if he only drives below a maximum speed of, e.g., 120km/h. The user may be charged a higher amount if he wishes to drive at speeds of up to 200km/h or more. The user may choose between different user profiles when he enters the vehicle. The more features are enabled for a user profile, the more the user will be charged, for example. For example, if a user drives a long distance with a rental car (e.g., from Germany to Italy), he may be charged less if he uses high quality roads such as highways, for example. If the user wants to avoid highways because he wants to avoid having to pay tolls, he might be charged more, because smaller roads may be of lower quality than highways.

A further security system 500 is exemplarily illustrated in Figure 4. As has been explained above with respect to Figure 3, the security system 500 may comprise an authentication module 501 and a security module 502. The authentication module 501 may be coupled to a sensor interface module 503. One or more sensors or authentication units 601,..., 605 may be coupled to the sensor interface module 503. In Figure 4, five different sensors/authentication units 601,... 605 are illustrated. A first sensor/authentication unit 601 may be a fingerprint sensor, for example. A second sensor/authentication unit 602 may be a voice recognition sensor, for example. A third sensor/authentication unit 603 may be a face recognition sensor. A fourth sensor /authentication unit 604 may be a unit which is configured to detect and authorize a vehicle key in a surrounding area. A fifth sensor/authentication unit 605 may be a unit which is configured to detect and authorize an electronic device (e.g., smart phone, laptop, tablet, etc.) which may replace the vehicle key. Any other alternative or additional sensors and authentication units are possible which allow to authenticate a user in any suitable way.

The sensors/authentication units 601,..., 605 may be arranged anywhere in the vehicle, for example. For example, one or more cameras may be mounted outside or inside the vehicle as has been described with respect to Figure 2 above. Voice recognition or fingerprint recognition sensors may also be arranged outside or inside the vehicle. If user authentication is needed to unlock the vehicle, the sensor/authentication unit may be arranged such that the user may perform authentication with the vehicle still being locked. However, it is also possible, for example, that the vehicle may be unlocked using a vehicle key (see Figure 1) and authentication is only performed when the user is already inside the vehicle. In such cases, sensors/authentication units may be arranged inside the vehicle, for example.

It is, however, also possible that sensors/authentication units are arranged in an electronic device, such as a mobile phone, a laptop, a tablet, or anything similar, for example. For example, the user may use a camera of his mobile phone to perform face recognition. The mobile phone may provide a picture to the sensor interface module 503, which then analyzes the picture and performs the authentication process. It is, however also possible that an application (app) is installed on the electronic device and the application performs the authentication process. In this case, the electronic device could replace the sensor interface module 503 and send information to the authentication module 501, as to whether the user has been authenticated or not.

The sensor interface module 503 may be configured to control the sensors/authentication units 601, ..., 605. The sensor interface module 503 may further be configured to read information provided by the sensors/authentication units 601, ..., 605. The sensor interface module 503 may further be configured to merge information received from multiple sensors/authentication units and to perform a diagnosis based on the information. Diagnosis may include at least one of the status of the sensors/authentication units (e.g., active, non-active, defective, etc.), a status of the user (e.g., conscious, unconscious, alert, sleepy, etc.), a status of the vehicle (e.g., fully functional, faulty, not operating properly, etc.), and a status of the passenger compartment (e.g., partly occupied, fully occupied, noisy, etc.), for example. The sensor interface module 503, however, is optional. The authentication module 501 may also be configured to control the sensors/authentication units 601, ..., 605 directly without using a sensor interface module 503 as an intermediate unit.

The authentication module 501 may receive the data concerning the user authentication from the sensors/authentication units 601, ..., 605. The authentication module 501 may comprise a memory, for example (not illustrated in Figure 4). Information concerning authorized users may be stored in the memory. For example, a user may use the fingerprint sensor to register his fingerprint. The fingerprint may then be stored in the memory as belonging to user A. The authentication module 501 may compare the data concerning the user authentication with the stored data to authenticate a user. If a user does not use personal authentication methods such as voice recognition or fingerprint recognition and only identifies himself with a vehicle key (non-personal authentication), the user may be identified as belonging to user group XY (unknown user carrying a key), for example.

When the user has been authenticated, the authentication module 501 may provide information to the security module 502 that the user has been identified as an authorized user (e.g., user A, B, C,...) or as belonging to an authorized user group (e.g., user group WX, XY, YZ,...). The security module 502 may have an internal memory or may be coupled to an external memory (not illustrated) . Several user profiles may be stored in the memory. For each user profile information may be stored as to which rights are granted for this specific profile and which features or functions of the vehicle are to be enabled for this user profile. Further, information may be stored as to which user profile is assigned to which user or user group.

When the security module 502 knows which user has been identified or to which user group the present user belongs, it may choose the correct user profile. The security module 502 may then initiate the enabling and/or disabling of the respective functions, depending on the applicable user profile. For example, the security module 502 may initiate the start/stop of the vehicle engine, the limitation of the maximum speed, the issuing of visual or acoustic warnings, and/or the granting or refusal of access to parts of the vehicle (e.g., trunk). The security module 502 may also perform a check whether some or all passengers in the vehicle conform to rules that may be set by a fleet management module 506.

The fleet management module 506 may represent an interface between the security system 500 and an external authority 509, e.g., the fleet management, the owner of the vehicle or any administrator of the vehicle. The fleet management module 506 may be configured to communicate with the external authority 509. The fleet management module 506 may be configured to communicate via any wireless or wired communications channel such as a WiFi connection, a mobile network connection, a cloud, or any other suitable communications channel. The fleet management module 506 may receive information about any changes of a user profile. For example, if the child of the car owner reaches a certain age, it may be granted more rights. Therefore, the user profile for the user "child" may be updated accordingly. The fleet management module 506 may receive information about such updates and may transmit this information to the security module 502, for example. The user profile may then be updated accordingly. The fleet management module 506 may also transmit information about the vehicle or about a certain user to the external authority.

The security system 500 may further comprise a powertrain interface module 504. The powertrain interface module 504 may be configured to send commands to the respective units 507 which are to be enabled/disabled. For example, the powertrain interface module 504 may provide information to the powertrain 507 that the speed of the vehicle is to be reduced. The powertrain interface module 504 may further provide information to the starter 507 that the vehicle is to be started. If the vehicle is an autonomous vehicle, the powertrain interface module 504 may instruct the powertrain and any other involved units 507 to drive to a certain location (e.g., "drive to headquarters" or "drive to workshop").

The security system 500 may further comprise a Human Machine Interface 505. The Human Machine Interface 505 may be configured to allow interaction with the user 508. The Human Machine Interface 505 may comprise at least one of a screen, monitor, touchscreen, loudspeaker, microphone, keyboard, keypad, camera, physical key, biometric input devices, mouse, graphical user interface, natural user interface, and brain computer interface. For example, the Human Machine Interface 505 may request the user to perform face recognition, voice recognition, or fingerprint recognition. For example, the request (e.g., "Please look into camera") may be displayed on a display or may be acoustically output via a loudspeaker. The user 508 may confirm that he is now looking into the camera and the photo may be taken by pressing an appropriate button or icon, for example. Any other requests or confirmations may be provided via the Human Machine Interface 505.

The security system 500 may be used both in personal, or in business environments. For example, the rights that are to be granted may differ between different members of a family. In a company, the rights to be granted may differ between different employees. Rental car companies may restrict the rights of a user who chooses a lower fare, for example. Any other applications are generally possible. By limiting the rights for different users, the security level may be increased. The security level may further be increased by making the choice of the user profile dependent on the authentication techniques that are used to identify a user. For example, by performing several authentication techniques, the security level may be increased compared to cases where only one or only few different authentication techniques are performed for identification.

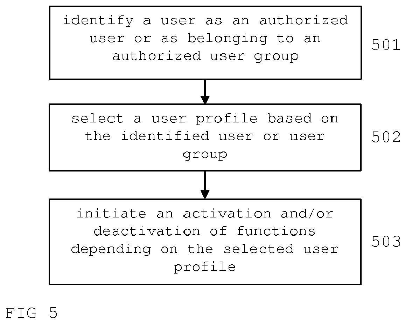

Figure 5 exemplarily illustrates a method according to one embodiment of the present invention. The method comprises identifying a user 508 as an authorized user or as belonging to an authorized user group (step 501) . The method further comprises selecting a user profile based on the identified user or user group (step 502), and initiating an activation and/or deactivation of functions depending on the selected user profile (503).

## Claims

1. A security system (500) for a vehicle (1) comprises an authentication module (501) configured to identify a user (508) as an authorized user or as belonging to an authorized user group; and
a security module (502) configured to select a user profile based on the identified user or user group, and to initiate an activation and/or deactivation of functions depending on the selected user profile.

2. The system (500) of claim 1, wherein initiating an activation and/or deactivation of functions includes initiating an activation and/or deactivation of at least one of vehicle-related functions and route-related functions.

3. The system (500) of claim 2, wherein the activation and/or deactivation of vehicle-related functions includes at least one of
granting or denying access to certain parts of the vehicle; enabling or disabling the start of the vehicle;
enabling or disabling the entertainment system;
enabling or disabling comfort functions of the vehicle; setting or derestricting a maximum speed; or
enabling or disabling a navigation system.

4. The system (500) of claim 2 or 3, wherein the activation and/or deactivation of road-related functions includes at least one of allowing or denying the operation of the vehicle in certain areas; or
allowing or denying the operation of the vehicle on a certain type of road.

5. The system (500) of any of claims 1 to 4, wherein identifying a user as an authorized user or as belonging to an authorized user group comprises at least one of
face recognition;
voice recognition;
fingerprint recognition;
detection of a vehicle key; and
detection of an electronic device functioning as a vehicle key.

6. The system (500) of any of claims 1 to 5, further comprising a fleet management interface module (506) that is configured to communicate with an external authority (509).

7. The system (500) of any of the preceding claims, further comprising a Human Machine Interface (505) that is configured to provide an interface between the system (500) and a user (508).

8. The system (500) of claim 7, wherein the Human Machine Interface (505) comprises at least one of
a screen;
a monitor;
a touchscreen;
a loudspeaker;
a microphone;
a keyboard;
a keypad;
a camera;
a physical key;
a biometric input device;
a mouse;
a graphical user interface;
a natural user interface; and
a brain computer interface.

9. The system (500) of any of the preceding claims, wherein the security module (502) is further configured to select a user profile based on the number and/or kinds of different authorization methods that are used for identifying the user (508).

10. A method comprising
identifying a user (508) as an authorized user or as belonging to an authorized user group;
selecting a user profile based on the identified user or user group; and
initiating an activation and/or deactivation of functions depending on the selected user profile.
